# EUROPEAN PATENT APPLICATION

(11) **EP 4 002 542 A1**
(43) Date of publication of application: **25.05.2022**
(21) Application number: 20840055.6
(22) Date of filing: 15.07.2020
(51) Int. Cl.: H01M 10/0583

(54) **DIE-CUTTING AND LAMINATION SYSTEM AND METHOD**

(30) Priority: 16.07.2019 CN 201910642631
(71) Applicant: SVOLT ENERGY TECHNOLOGY CO., LTD, Changzhou, Jiangsu 213200 (CN)
(72) Inventor: KIM, Seong Ju, hangzhou, Jiangsu 213200 (CN); JEONG, Hyeok, hangzhou, Jiangsu 213200 (CN); ZHAO, Kai, hangzhou, Jiangsu 213200 (CN); XU, Chunlong, hangzhou, Jiangsu 213200 (CN); TENG, Lijie, hangzhou, Jiangsu 213200 (CN); KIM, Jeong Hyun, hangzhou, Jiangsu 213200 (CN); WANG, Yang, hangzhou, Jiangsu 213200 (CN)
(74) Representative: Hewett, Jonathan Michael Richard
(86) International application number: PCT/CN2020/102124
(87) International publication number: WO 2021/008553

(57) **Abstract**

A die-cutting lamination system and a die-cutting lamination method are provided. The system includes unwinding mechanisms, an electrode-winding cutting mechanism, a preheating and rolling device, a detection apparatus, separator cutting mechanisms and a lamination apparatus. The negative electrode cutting mechanism is configured to cooperate with the negative electrode unwinding mechanism and cut negative electrode sheets, the positive electrode cutting mechanism is configured to cooperate with the positive electrode unwinding mechanism and cut positive electrode sheets, in such a manner that a laminated layer including a separator, the negative electrode sheets, and the positive electrode sheets is obtained, the negative electrode sheets and the positive electrode sheets being alternately distributed on an upper side and a lower side of the separator; the preheating and rolling device is configured to enable the positive electrode sheets and the negative electrode sheets of the laminated layer to be respectively adhered to the separator; the detection apparatus is configured to detect whether the laminate has a defect; the first separator cutting mechanism is configured to cut and discharge defective lamination units in pairs, and the second separator cutting mechanism is configured to perform separator cutting on a last qualified lamination unit based on a number of layers to be laminated; and the lamination apparatus is configured to stack the positive electrode lamination units and the negative electrode lamination units alternatel y.

## Description

### CROSS-REFERENCE TO RELATED APPLICATIONS

The present application claims priority to Chinese Patent Application No. 201910642631.6, filed on July 16, 2019 with China National Intellectual Property Administration, titled "DIE-CUTTING LAMINATION SYSTEM AND METHOD", which is incorporated herein by reference in its entirety.

### FIELD

The present disclosure relates to the field of battery technologies, and more particularly, to a die-cutting lamination system and a die-cutting lamination method.

### BACKGROUND

In the automotive industry environment that uses traditional energy as a power supply, environmental pollution issues have aroused people's attention to environmental protection and resource utilization. Actively developing new energy vehicles and realizing the electrification of the automobile industry are strategic measures to achieve the goal of "overtaking on a bend" over the foreign automobile industry. Lithium-ion device technology is a key technology for the development of electric vehicles. Square lamination technology is currently one of the most advanced lithium-ion battery manufacturing technologies, and the lamination speed directly determines the production capacity of the entire line and the cell manufacturing cost.

At present, the z-type lamination process is mostly adopted, the fastest lamination speed in the world in mass production is 0.6s/sheet, and this lamination speed is slow, resulting in a large number of device requirements, a large floor area, high purchase costs, and subsequent high maintenance costs and high energy consumption. There are two main reasons for the slow lamination speed: one reason is that the lamination adopts cartridge type feeding, there will be a double-sheet suction phenomenon during the feeding process, therefore, a traditional lamination machine would include an air blower, a brush, a shaker, a double-sheet detector and other devices to prevent the double-sheet suction, and at present, no matter what method is used, the problem of double-sheet suction cannot be completely eliminated, and these devices greatly reduce the feeding speed of the manipulator; and the other reason is that the traditional lamination method is to laminate a negative electrode sheet first, then wrap a separator on the negative electrode sheet, then laminate a positive electrode sheet, and subsequently wrap a separator on the positive electrode sheet, a laminated unit of this lamination method is composed of a single electrode sheet or a single separator, and due to the limitation of the mechanical structure, the lamination speed cannot be substantially increased. Therefore, the lamination process is still to be further improved.

### SUMMARY

In view of this, the present disclosure aims to provide a die-cutting lamination system to improve a lamination efficiency.

In order to achieve the purpose, the technical solutions of the present disclosure are realized as follows.

A die-cutting lamination system is proposed, and the system includes: unwinding mechanisms including a negative electrode unwinding mechanism, a separator unwinding mechanism, and a positive electrode unwinding mechanism, wherein the negative electrode unwinding mechanism and the positive electrode unwinding mechanism are arranged on an upper side and a lower side of the separator unwinding mechanism, and the negative electrode unwinding mechanism and the positive electrode unwinding mechanism are configured to operate alternately; an electrode-winding cutting mechanism arranged downstream of the unwinding mechanisms and including a negative electrode cutting mechanism and a positive electrode cutting mechanism, wherein the negative electrode cutting mechanism is configured to cooperate with the negative electrode unwinding mechanism and cut negative electrode sheets, the positive electrode cutting mechanism is configured to cooperate with the positive electrode unwinding mechanism and cut positive electrode sheets, in such a manner that a laminated layer including a separator, the negative electrode sheets, and the positive electrode sheets is obtained, the negative electrode sheets and the positive electrode sheets being alternately distributed on an upper side and a lower side of the separator; a preheating and rolling device including a preheating apparatus and a rolling apparatus which are sequentially connected, wherein the preheating apparatus is arranged between the unwinding mechanisms and the rolling apparatus, the rolling apparatus is arranged downstream of the electrode-winding cutting mechanism, and the rolling apparatus is configured to enable the positive electrode sheets and the negative electrode sheets of the laminated layer to be respectively adhered to the separator to obtain a laminate including alternately distributed positive electrode lamination units and negative electrode lamination units; a detection apparatus arranged downstream of the preheating and rolling device and configured to detect whether the laminate has a defect; separator cutting mechanisms including a first separator cutting mechanism and a second separator cutting mechanism, wherein the first separator cutting mechanism is arranged upstream of the second separator cutting mechanism, and configured to cut and discharge, based on a detection result of the detection apparatus, a defective positive/negative electrode lamination unit and a negative/positive electrode lamination unit adjacent to the defective positive/negative electrode lamination unit in pairs, and the second separator cutting mechanism is configured to perform separator cutting on a last qualified lamination unit based on a number of layers to be laminated; and a lamination apparatus arranged downstream of the separator cutting mechanisms and configured to stack the positive electrode lamination units and the negative electrode lamination units alternately.

Further, the lamination apparatus includes a clamping jaw, a first auxiliary roller, and a second auxiliary roller, and the clamping jaw and the first auxiliary roller are movable and are configured to cooperate with the second auxiliary roller to enable the positive electrode lamination units and the negative electrode lamination units to be spread, aligned and alternately stacked.

Further, the negative electrode unwinding mechanism, the separator unwinding mechanism, and the positive electrode unwinding mechanism are distributed from top to bottom or from bottom to top among the unwinding mechanisms.

Further, the die-cutting lamination system further includes a plurality of tension rollers arranged between the unwinding mechanisms and the electrode-winding cutting mechanism and distributed on upper and/or lower sides of the negative electrode sheets, the separator, and the positive electrode sheets at intervals.

Further, a length of each of the cut positive electrode sheets is smaller than a length of each of the cut negative electrode sheets; and a horizontal distance between a positive electrode sheet of a positive electrode lamination unit and a negative electrode sheet of a negative electrode lamination unit adjacent to the positive electrode lamination unit is 1mm to 6mm.

Further, the die-cutting lamination system further includes a discharger arranged downstream of the detection apparatus, and the discharger is configured to cooperate with the first separator cutting mechanism to discharge a defective lamination unit.

Compared with the related art, the die-cutting lamination system disclosed by the present disclosure has the following advantages.

(1) according to the present disclosure, the die-cutting apparatus and the lamination apparatus are integrated in the die-cutting lamination system, on the one hand, a feeding cartridge is omitted, and a limitation of feeding with the cartridge is broken through, on the other hand, the electrode sheets are adhered to the separator through preheating and roller pressing, and the lamination feed is a roll material instead of a single sheet feed, and continuous feeding can be achieved, which can break through a limitation of the mechanical structure, increase the lamination speed, and reduce a system fault rate; (2) the number of lamination machines can be greatly reduced, the acquisition cost of the devices is reduced, the energy consumption of the devices is reduced, and a theoretical lamination speed can reach 0.25s/sheet to 0.6s/sheet; (3) an edge shape of the separator after the separator is cut cannot be ensured and a risk of the separator wrinkling to expose the electrode sheets exists in the lamination process; instead, the separator between lamination units containing no defect is not cut during the lamination process using the die-cutting lamination system, but is cut only after the lamination process is finished, and a number of cuttings of the separator is very small, which greatly reduces the risk of the separator wrinkling to expose the electrode sheets; (4) if each lamination unit is cut off separately and then detected and laminated, the cut lamination units need to be transferred to a positioning platform and then transferred to a lamination platform after being detected by a detection apparatus, namely, an additional group of manipulators and an additional positioning platform need to be added; instead, when the die-cutting lamination system disclosed by the present disclosure is adopted to detect the lamination units, there is no need to separately provide an additional positioning platform or an additional group of manipulators, and the structure is simpler; (5) the lamination of the system can be conducted in a horizontal manner, thereby facilitating lamination alignment and reducing a space occupation of the system in the vertical direction.

Another purpose of the present disclosure is to provide a die-cutting lamination method using the die-cutting lamination system described above, so as to improve a lamination efficiency. In order to achieve the purpose, the technical solutions of the present disclosure are realized as follows.

A die-cutting lamination method is proposed, and the method includes: (1) providing, by the unwinding mechanisms, electrode sheets and a separator, enabling the negative electrode cutting mechanism to cooperate with the negative electrode unwinding mechanism and cut negative electrode sheets, and enabling the positive electrode cutting mechanism to cooperate with the positive electrode unwinding mechanism and cut positive electrode sheets, to obtain a laminated layer comprising a separator, the negative electrode sheets, and the positive electrode sheets, the negative electrode sheet and the positive electrode sheet being alternately distributed on an upper side and a lower side of the separator; (2) preheating, by the preheating apparatus, the separator, the positive electrode sheet, and the negative electrode sheet before and after the cutting, and roller-pressing, by the rolling apparatus, the laminated layer to respectively adhere the positive electrode sheets and the negative electrode sheets of the laminated layer to the separator to obtain a laminate comprising alternately distributed positive electrode lamination units and negative electrode lamination units; (3) detecting, by the detection apparatus, whether the laminate has a defect, and cutting and discharging, by the first separator cutting mechanism, based on a detection result of the detection apparatus, a defective positive/negative electrode lamination unit and a negative/positive electrode lamination unit adjacent to the defective positive/negative electrode lamination unit in pairs; and (4) alternately stacking, by the lamination apparatus, the positive electrode lamination units and the negative electrode lamination units, and performing separator cutting, by the second separator cutting mechanism, on a last qualified lamination unit based on a number of layers to be laminated to obtain an electrode assembly.

Further, a length of each positive electrode sheet in the electrode assembly is smaller than a length of each negative electrode sheet in the electrode assembly, and the length of the negative electrode sheet is 0.5mm to 3mm smaller than a length of each separator in the electrode assembly.

Further, the method further includes: stacking, by the clamping jaw, the first auxiliary roller, and the second auxiliary roller in cooperation, lamination units to obtain the electrode assembly in which the positive electrode lamination units and the negative electrode lamination units are spread, aligned, and alternately stacked.

Further, the method further includes: positioning the negative electrode sheet above the separator, positioning the positive electrode sheet below the separator, alternately pre-stacking a plurality of negative electrode lamination units and a plurality of positive electrode lamination units, and then stacking one layer of separator; or positioning the positive electrode sheet above the separator, positioning the negative electrode sheet below the separator, pre-stacking one layer of separator, and then alternately stacking a plurality of positive electrode lamination units and a plurality of negative electrode lamination units.

Compared with the related art, method for die-cutting lamination disclosed by the present disclosure has the following advantages.

(1) According to the method, the electrode sheet cutting and lamination are coupled together, on the one hand, a feeding cartridge is omitted, and a limitation of feeding with the cartridge is broken through, on the other hand, the electrode sheets are adhered to the separator through preheating and roller pressing to form the lamination units, the lamination feed is a roll material instead of a single sheet feed, and continuous feeding can be achieved, which can break through a limitation of the mechanical structure, increase the lamination speed, and reduce a system fault rate; (2) the electrode sheets and the separator are laminated synchronously, the lamination speed is fast, and a theoretical lamination speed can reach 0.25s/sheet to 0.6s/sheet; (3) a number of cuttings of the separator is very small, which greatly reduces a risk of the separator wrinkling to expose the electrode sheets; (4) compared with a manner that each lamination unit is cut off separately and then detected and laminated, there is no need to transfer lamination units during detection of the lamination units, and the process is simpler; and (5) the lamination manner can be a horizontal lamination manner, which is more favorable to the lamination alignment compared with the vertical lamination manner.

### BRIEF DESCRIPTION OF DRAWINGS

The accompanying drawings constitute a part of the present disclosure and are used to provide a further understanding of the present disclosure, and the illustrative embodiments of the present disclosure and the description thereof serve to explain the present disclosure rather than constituting any improper limitation on the present disclosure, in which:
FIG. 1 is a schematic structural diagram of a die-cutting lamination system according to an embodiment of the present disclosure;
FIG. 2 is a schematic structural diagram of a laminate including alternately distributed positive electrode lamination units and negative electrode lamination units according to another embodiment of the present disclosure;
FIG. 3 is a schematic diagram showing transferring and stacking of lamination units by using a clamping jaw and auxiliary rollers according to an embodiment of the present disclosure; and
FIG. 4 is a schematic diagram of a die-cutting lamination system with a clamping jaw clamping a lamination unit according to an embodiment of the present disclosure.

### DESCRIPTION OF EMBODIMENTS

It should be noted that, in the present disclosure, the embodiments and the features of the embodiments may be combined with each other without conflict.

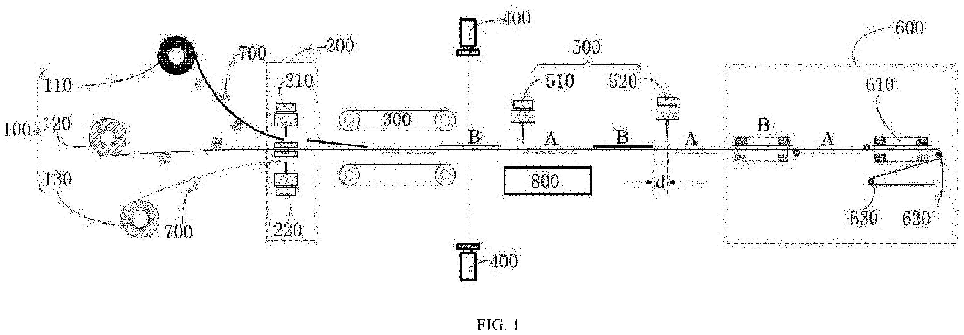

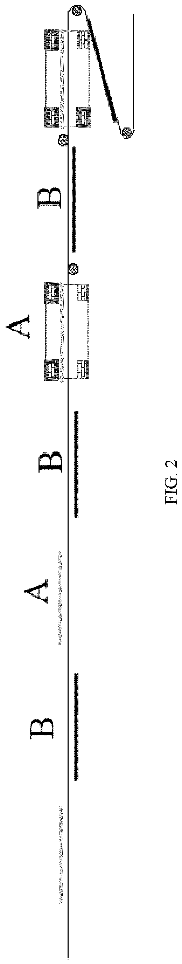

According to a first aspect of the present disclosure, a die-cutting lamination system is provided. According to embodiments of the present disclosure, as illustrated in FIG. 1 or FIG. 2, the system includes an unwinding mechanism 100, an electrode-winding cutting mechanism 200, a preheating and rolling device 300, a detection apparatus 400, a separator cutting mechanism 500, and a lamination apparatus 600.

The die-cutting lamination system described above will be described in detail with the embodiments with reference to FIGS. 1 to 4.

### Unwinding mechanism 100 and electrode-winding cutting mechanism 200

According to the embodiments of the present disclosure, the unwinding mechanism 100 includes a negative electrode unwinding mechanism 110, a separator unwinding mechanism 120, and a positive electrode unwinding mechanism 130, the negative electrode unwinding mechanism 110 and the positive electrode unwinding mechanism 130 are arranged on an upper side and a lower side of the separator unwinding mechanism 120, and the negative electrode unwinding mechanism 110 and the positive electrode unwinding mechanism 130 are configured to operate alternately. The electrode-winding cutting mechanism 200 is arranged downstream of the unwinding mechanism 100, and the electrode-winding cutting mechanism 200 includes a negative electrode cutting mechanism 210 and a positive electrode cutting mechanism 220. The negative electrode cutting mechanism 210 is configured to cooperate with the negative electrode unwinding mechanism 110 and cut negative electrode sheets, and the positive electrode cutting mechanism 220 is configured to cooperate with the positive electrode unwinding mechanism 130 and cut positive electrode sheets, in such a manner that a laminated layer including a separator, the negative electrode sheets, and the positive electrode sheets is obtained, the negative electrode sheets and the positive electrode sheets are alternately distributed on an upper side and a lower side of the separator.

According to the embodiments of the present disclosure, when the negative electrode cutting mechanism 110 performs a cutting operation, unwinding of the positive electrode unwinding mechanism 130 is suspended; when the cutting operation of the negative electrode cutting mechanism 210 is completed, unwinding of the negative unwinding mechanism 110 is suspended, unwinding of the positive electrode unwinding mechanism 130 starts, and a cutting operation is performed at the positive electrode cutting mechanism 220; when the cutting operation of the positive electrode cutting mechanism 220 is completed, the unwinding of the positive electrode unwinding mechanism 130 is suspended, the unwinding of the negative electrode unwinding mechanism 110 starts, and a cutting operation is performed at the negative electrode cutting mechanism 110. In such an alternate manner, the cut negative electrode sheets and the cut positive electrode sheets are alternately distributed on the upper side and the lower side of the separator, and the separator unwinding mechanism 120 operates continuously relative to the negative electrode cutting mechanism 110 and/or the positive electrode cutting mechanism 130.

According to a specific embodiment of the present disclosure, as illustrated in FIG. 1, the die-cutting lamination system may further include a plurality of tension rollers 700, and the plurality of tension rollers 700 are arranged between the unwinding mechanism 100 and the electrode-winding cutting mechanism 200 and are distributed on upper and/or lower sides of the negative electrode sheet, the separator, and the positive electrode sheet at intervals, thereby facilitating unwinding and starting and stopping of the electrode sheets and the separator.

According to another specific embodiment of the present disclosure, unwinding and cutting intervals of the positive electrode unwinding mechanism, the negative electrode unwinding mechanism, the positive electrode cutting mechanism, and the negative electrode cutting mechanism can be comprehensively adjusted, in such a manner that a length of the cut positive electrode sheet is smaller than a length of the cut negative electrode sheet, and a horizontal distance **d** between a positive electrode sheet in a positive electrode lamination unit and a negative electrode sheet in a negative electrode lamination unit adjacent to the positive electrode lamination unit is 1mm to 6 mm (as illustrated in FIG. 1), and therefore the length of the separator, the length of the negative electrode sheet, and the length of the positive electrode sheet decreases in order in the finally obtained electrode assembly, for example, the length of the negative electrode sheet can be 0.5mm to 3 mm smaller than the length of the separator, ensuring higher safety and stability of the electrode assembly. It should be noted that the length described in the present disclosure is defined in terms of a moving direction of the electrode sheets, and can also be understood as the length of a respective side.

According to another specific embodiment of the present disclosure, the negative electrode unwinding mechanism 110, the separator unwinding mechanism 120, and the positive electrode unwinding mechanism 130 in the unwinding mechanism 100 may be distributed from top to bottom or from bottom to top. FIG. 2 is a schematic diagram illustrating alternated positive electrode lamination unit **A** and negative electrode lamination unit **B** when the negative electrode unwinding mechanism 110, the separator unwinding mechanism 120 and the positive electrode unwinding mechanism 130 are distributed from bottom to top.

### Preheating and rolling device 300

According to the embodiments of the present disclosure, the preheating and rolling device 300 includes a preheating apparatus (not individually shown) and a rolling apparatus (not individually shown) that are sequentially connected, the preheating apparatus is arranged between the unwinding mechanism 110 and the rolling apparatus, the rolling apparatus is arranged downstream of the electrode-winding cutting mechanism 200, and the rolling apparatus is configured to enable the positive electrode sheets and the negative electrode sheets of the laminated layer to be respectively adhered to the separator to obtain a laminate including alternately distributed positive electrode lamination units A and negative electrode lamination units B. The preheating apparatus can preheat the separator, the positive electrode sheet, and the negative electrode sheet before the electrode sheets are cut, so that the preheating time is longer, and an adhesion effect of the roller-pressed electrode sheets and separator is further improved. The positive electrode lamination unit A includes a layer of positive electrode sheet and a layer of separator, and the negative electrode lamination unit B includes a layer of negative electrode sheet and a layer of separator.

### Detection apparatus 400

According to the embodiments of the present disclosure, the detection apparatus 400 is arranged downstream of the preheating and rolling device 300, and configured to detect whether the laminate has a defect. The detection apparatus 400 can detect a position, a size, a wrinkle, a tab wrinkle, an edge fold, an unfilled corner and the like of the electrode sheets, so that defective lamination units can be discarded in time; further, when the lamination units are under detection with the detection apparatus, there is no need for the lamination units to be transferred, it is no longer necessary to separately and additionally provide a positioning platform and a group of manipulators, and the structure is simpler.. The detection apparatus 400 may be a CCD detection mechanism.

### Separator cutting mechanism 500

According to the embodiments of the present disclosure, the separator cutting mechanism 500 includes a first separator cutting mechanism 510 and a second separator cutting mechanism 520. The first separator cutting mechanism 510 is arranged upstream of the second separator cutting mechanism 520, and configured to cut and discharge, based on a detection result of the detection apparatus, a defective positive electrode lamination unit/a defective negative electrode lamination unit and a negative electrode lamination unit/a positive electrode lamination unit adjacent to the defective positive electrode lamination unit/the defective negative electrode lamination unit in pairs. The second separator cutting mechanism 520 is configured to perform separator cutting on a last qualified lamination unit based on a number of layers to be laminated. It should be noted that, in order to ensure the accuracy of subsequent lamination, when a lamination unit has a defect, the positive electrode lamination unit and the negative electrode lamination unit need to be discharged in pairs, for example, if one positive electrode lamination unit has a defect, one negative electrode lamination unit needs to be discarded at the same time; in addition, the separator between lamination units having no defects is not cut off in the subsequent lamination process, and the separator is cut off by the second separator cutting mechanism only after the lamination is finished, so that the number of times for cutting the separator is very small, and a risk of the separator wrinkling to expose the electrode sheets in the lamination process is greatly reduced.

According to a specific embodiment of the present disclosure, the die-cutting lamination system may further include a discharger 800, and the discharger 800 may be arranged downstream of the detection apparatus 400 and configured to cooperate with the first separator cutting mechanism 510 to discharge a defective lamination unit based on the display of the detection apparatus 400. The discharger 800 may be an NG discharger.

### Lamination apparatus 600

According to the embodiments of the present disclosure, the lamination apparatus 600 is arranged downstream of the separator cutting mechanism 500 and configured to stack the positive electrode lamination units A and the negative electrode lamination units B alternately, thereby obtaining an electrode assembly including a plurality of layers of positive electrode sheet and a plurality of layers of negative electrode sheet.

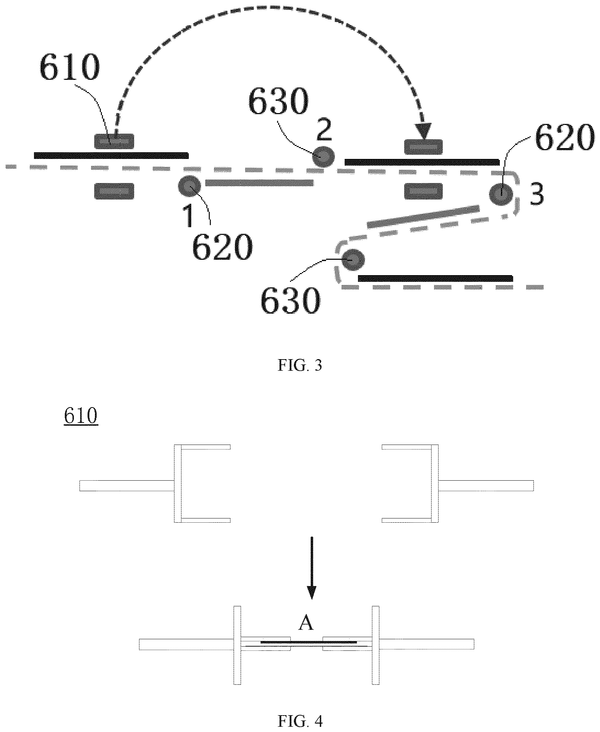

According to an embodiment of the present disclosure, as illustrated in FIG. 1 or FIG. 3, the lamination apparatus 600 may include a clamping jaw 610, a first auxiliary roller 620, and a second auxiliary roller 630, the clamping jaw 610 and the first auxiliary roller 620 are movable and are configured to cooperate with the second auxiliary roller 630 in such a manner that the positive electrode lamination units A and the negative electrode lamination units B are spread, aligned, and alternately stacked. When the lamination apparatus is used to transfer and laminate lamination units, the clamping jaw clamps the laminate from upper and lower sides of the lamination units (as illustrated in FIG. 4, the clamping jaw can clamp the laminate from an upper side and a lower side that are perpendicular to a moving direction of the electrode sheets), and the first auxiliary roller and the second auxiliary roller cooperate with the clamping jaw to realize the stacking of two adjacent lamination units, and assist in the alignment of the lamination units; the position of the second auxiliary roller is relatively fixed and can be finely adjusted, and the tension of the lamination units is controlled by adjusting the first auxiliary roller and the second auxiliary roller, so that the lamination units are alternately stacked and aligned; in addition, the lamination manner of the present disclosure using the cooperation of the clamping jaw with the auxiliary rollers is a horizontal lamination manner, which is not only more conducive to lamination alignment and but also allows a smaller space occupancy rate of the system in the vertical direction, compared with a vertical lamination manner; further, in the present disclosure, the clamping jaw is adopted to replace a negative pressure manipulator to realize the transfer of lamination units, which can effectively avoid a risk of dropping of a lower electrode sheet/a lower separator of a lamination unit when sucking an upper side of the lamination unit to transfer the lamination unit.

According to another specific embodiment of the present disclosure, the lamination apparatus 600 includes two sets of the first auxiliary roller 620 and the second auxiliary roller 630. One set is in an operating state in which the auxiliary rollers cooperate with the clamping jaw to stack and align two adjacent lamination units, the other set is in a ready state for stacking and aligning a next pair of lamination units, and after the two adjacent lamination units are stacked and aligned, the auxiliary rollers in the operating state are withdrawn and enter the ready state. For example, as illustrated in FIG. 3, the auxiliary rollers are in the ready state, the first auxiliary roller 620 is located at position 1, and the second auxiliary roller 630 is located at position 2; when the clamping jaw 610 clamps a lamination unit and transfers the lamination unit to the lamination position, the set of auxiliary rollers is put into operation, the first auxiliary roller 620 is transferred to position 3, the position of the second auxiliary roller is basically unchanged, and the second auxiliary roller is only finely adjusted at the original position to aid in aligning the lamination unit, and at this time, the other set of auxiliary rollers is let ready at position 1 and position 2.

According to another specific embodiment of the present disclosure, when the negative electrode unwinding mechanism 110, the separator unwinding mechanism 120, and the positive electrode unwinding mechanism 130 in the unwinding mechanism 100 are distributed from top to bottom, the negative electrode sheet is positioned above the separator, the positive electrode sheet is positioned below the separator, a plurality of negative electrode lamination units and a plurality of positive electrode lamination units are alternately pre-stacked, and then one layer of separator is stacked. When the negative electrode unwinding mechanism 110, the separator unwinding mechanism 120, and the positive electrode unwinding mechanism 130 in the unwinding mechanism 100 are distributed from bottom to top, the positive electrode sheet is positioned above the separator, the negative electrode sheet is positioned below the separator, one layer of separator is pre-stacked, and then a plurality of positive electrode lamination units and a plurality of negative electrode lamination units are alternately stacked. The negative electrode lamination unit includes a layer of negative electrode sheet and a layer of separator.

According to another specific embodiment of the present disclosure, a first layer of electrode sheet in each electrode assembly is a negative electrode sheet. For example, the negative electrode unwinding mechanism 110, the separator unwinding mechanism 120, and the positive electrode unwinding mechanism 130 are distributed from top to bottom, and assuming that the electrode assembly has N layers (N is an odd number), including (N-1)/2 layers of positive electrode and (N+1)/2 layers of negative electrode, the positive electrode unwinding mechanism stops the unwinding operation when the ((N+1)/2)^{th} layer of negative electrode sheet is cut, in such a manner that a separate segment of separator is reserved between the ((N+1)/2)^{th} negative electrode sheet and the ((N+1)/2+1)^{th} negative electrode sheet, and the positive electrode unwinding mechanism continues the unwinding operation after the ((N+1)/2+1)^{th} negative electrode sheet is cut. After the lamination is finished, the second separator cutting mechanism cuts the separator, and the cutting position of the separator is at the right side of the ((N + 1)/2 +1)^{th} negative electrode sheet and is 0.5mm to 3 mm away from the rightmost end of this electrode sheet. After the cutting, the reserved last layer of separator is covered on the last negative electrode sheet. Then a fixing adhesive tape is affixed, and finally blanking is performed.

In summary, the die-cutting lamination system of the present disclosure has the following advantages: (1) according to the present disclosure, the die-cutting apparatus and the lamination apparatus are integrated in the die-cutting lamination system, on the one hand, a feeding cartridge is omitted, and a limitation of feeding with the cartridge is broken through, on the other hand, the electrode sheets are adhered to the separator through preheating and roller pressing, and the lamination feed is a roll material instead of a single sheet feed, which can break through a limitation of the mechanical structure and increase the lamination speed; (2) the number of lamination machines can be greatly reduced, the feeding can be conducted continuously, the acquisition cost of the devices is reduced, the energy consumption of the device is reduced, and a theoretical lamination speed can reach 0.25s/sheet to 0.6s/sheet; (3) an edge shape of the separator after the separator is cut cannot be ensured and a risk of the separator wrinkling to expose the electrode sheets exists in the lamination process; instead, the separator between lamination units containing no defect is not cut during the lamination process using the die-cutting lamination system, but is cut only after the lamination process is finished, and a number of cuttings of the separator is very small, which greatly reduces the risk of the separator wrinkling to expose the electrode sheets; (4) if each lamination unit is cut off separately and then detected and laminated, the cut lamination units need to be transferred to a positioning platform and then transferred to a lamination platform after being detected by a detection apparatus, namely, an additional group of manipulators and an additional positioning platform need to be added; instead, when the die-cutting lamination system disclosed by the present disclosure is adopted to detect the lamination units, there is no need to separately provide an additional positioning platform or an additional group of manipulators, and the structure is simpler; and (5) the lamination of the system can be conducted in a horizontal manner, thereby facilitating lamination alignment and reducing a space occupation of the system in the vertical direction.

According to a second aspect of the present disclosure, the present disclosure provides a die-cutting lamination method using the die-cutting lamination system. Referring to FIG. 1, according to embodiments of the present disclosures, the method includes: (1) providing, by the unwinding mechanisms, electrode sheets and a separator, enabling the negative electrode cutting mechanism to cooperate with the negative electrode unwinding mechanism and cut negative electrode sheets, and enabling the positive electrode cutting mechanism to cooperate with the positive electrode unwinding mechanism and cut positive electrode sheets, to obtain a laminated layer including the separator, the negative electrode sheets, and the positive electrode sheets, the negative electrode sheets and the positive electrode sheets being alternately distributed on an upper side and a lower side of the separator; (2) preheating, by the preheating apparatus, the separator, and the positive electrode sheets and the negative electrode sheets before and after cutting, and roller pressing, by the rolling apparatus, the laminated layer to respectively adhere the positive electrode sheets and the negative electrode sheets of the laminated layer to the separator to obtain a laminate including alternately distributed positive electrode lamination units and negative electrode lamination units; (3) detecting, by the detection apparatus, whether the laminate has a defect, and cutting and discharging, by the first separator cutting mechanism, based on a detection result of the detection apparatus, a defective positive/negative electrode lamination unit and a negative/negative electrode lamination unit adjacent to the defective positive/negative electrode lamination unit in pairs; (4) alternately stacking, by the lamination apparatus, the positive electrode lamination units and the negative electrode lamination units, and performing separator cutting, by the second separator cutting mechanism, on a last qualified lamination unit based on a number of layers to be laminated to obtain an electrode assembly.

According to a specific embodiment of the present disclosure, the lamination units may be stacked by the clamping jaw, the first auxiliary roller, and the second auxiliary roller in cooperation to obtain the electrode assembly in which positive electrode lamination units and negative electrode lamination units are spread, aligned, and alternately stacked. The lamination manner is a horizontal lamination manner, and compared with the vertical lamination manner, the horizontal lamination manner is more favorable for the alignment of the lamination and the system occupies smaller space in the vertical direction; further, according to the present disclosure, the clamping jaw is adopted to replace the negative pressure manipulator to realize the transfer of lamination units, which can effectively avoid a risk of dropping of a lower electrode sheet/separator of a lamination unit when sucking an upper side of the lamination unit to transfer the lamination unit.

According to still another embodiment of the present disclosure, a length of each positive electrode sheet in the finally obtained electrode assembly is smaller than a length of each negative electrode sheet in the finally obtained electrode assembly, and the length of each negative electrode sheet in the finally obtained electrode assembly may be 0.5mm to 3mm smaller than a length of each separator in the finally obtained electrode assembly. The risk of exposing the electrode sheets can thereby be avoided.

According to yet another specific embodiment of the present disclosure, when the negative electrode sheet is positioned above the separator and the positive electrode sheet is positioned below the separator, a plurality of negative electrode lamination units and a plurality of positive electrode lamination units are alternately pre-stacked, and then a layer of separator is stacked; when the positive electrode sheet is positioned above the separator and the negative electrode sheet is positioned below the separator, a layer of separator is pre-stacked, and then a plurality of positive electrode lamination units and a plurality of negative electrode lamination units are alternately stacked.

In summary, the die-cutting lamination method of the present disclosure has the following advantages. (1) According to the method, the electrode sheet cutting and lamination are coupled together, on the one hand, a feeding cartridge is omitted, and a limitation of feeding with the cartridge is broken through, on the other hand, the electrode sheets are adhered to the separator through preheating and roller pressing to form the lamination units, the lamination feed is a roll material instead of a single sheet feed, and continuous feeding can be achieved, which can break through a limitation of the mechanical structure, and increase the lamination speed; (2) the electrode sheets and the separator are laminated synchronously, the lamination speed is fast, and a theoretical lamination speed can reach 0.25s/sheet to 0.6s/sheet; (3) a number of cuttings of the separator is very small, which greatly reduces a risk of the separator wrinkling to expose the electrode sheets; (4) compared with a manner that each lamination unit is cut off separately and then detected and laminated, there is no need to transfer lamination units during detection of the lamination units, and the process is simpler; and (5) the lamination manner can be a horizontal lamination manner, which is more favorable to the lamination alignment compared with the vertical lamination manner. It should be noted that features and effects described above for the die-cutting lamination system are also applicable to the die-cutting lamination method, which will not be elaborated here.

The above description merely illustrates the preferred embodiments of the present disclosure and is not intended to limit the present disclosure. Any modification, equivalent substitution, or improvement, etc. made within the essence and principles of the present disclosure shall fall within the protection scope of the present disclosure.

## Claims

1. A die-cutting lamination system, comprising:
unwinding mechanisms comprising a negative electrode unwinding mechanism, a separator unwinding mechanism, and a positive electrode unwinding mechanism, wherein the negative electrode unwinding mechanism and the positive electrode unwinding mechanism are arranged on an upper side and a lower side of the separator unwinding mechanism, and the negative electrode unwinding mechanism and the positive electrode unwinding mechanism are configured to operate alternately;
an electrode-winding cutting mechanism arranged downstream of the unwinding mechanisms and comprising a negative electrode cutting mechanism and a positive electrode cutting mechanism, wherein the negative electrode cutting mechanism is configured to cooperate with the negative electrode unwinding mechanism and cut negative electrode sheets, the positive electrode cutting mechanism is configured to cooperate with the positive electrode unwinding mechanism and cut positive electrode sheets, in such a manner that a laminated layer comprising a separator, the negative electrode sheets, and the positive electrode sheets is obtained, the negative electrode sheets and the positive electrode sheets being alternately distributed on an upper side and a lower side of the separator;
a preheating and rolling device comprising a preheating apparatus and a rolling apparatus which are sequentially connected, wherein the preheating apparatus is arranged between the unwinding mechanisms and the rolling apparatus, the rolling apparatus is arranged downstream of the electrode-winding cutting mechanism, and the rolling apparatus is configured to enable the positive electrode sheets and the negative electrode sheets of the laminated layer to be respectively adhered to the separator to obtain a laminate comprising alternately distributed positive electrode lamination units and negative electrode lamination units;
a detection apparatus arranged downstream of the preheating and rolling device and configured to detect whether the laminate has a defect;
separator cutting mechanisms comprising a first separator cutting mechanism and a second separator cutting mechanism, wherein the first separator cutting mechanism is arranged upstream of the second separator cutting mechanism, and configured to cut and discharge, based on a detection result of the detection apparatus, a defective positive/negative electrode lamination unit and a negative/positive electrode lamination unit adjacent to the defective positive/negative electrode lamination unit in pairs, and the second separator cutting mechanism is configured to perform separator cutting on a last qualified lamination unit based on a number of layers to be laminated; and
a lamination apparatus arranged downstream of the separator cutting mechanisms and configured to stack the positive electrode lamination units and the negative electrode lamination units alternately.

2. The die-cutting lamination system according to claim 1, wherein the lamination apparatus comprises a clamping jaw, a first auxiliary roller, and a second auxiliary roller, and the clamping jaw and the first auxiliary roller are movable and are configured to cooperate with the second auxiliary roller to enable the positive electrode lamination units and the negative electrode lamination units to be spread, aligned and alternately stacked.

3. The die-cutting lamination system according to claim 1 or 2, wherein the negative electrode unwinding mechanism, the separator unwinding mechanism, and the positive electrode unwinding mechanism are distributed from top to bottom or from bottom to top among the unwinding mechanisms.

4. The die-cutting lamination system according to any one of claims 1 to 3, further comprising a plurality of tension rollers arranged between the unwinding mechanisms and the electrode-winding cutting mechanism and distributed on upper and/or lower sides of the negative electrode sheets, the separator, and the positive electrode sheets at intervals.

5. The die-cutting lamination system according to any one of claims 1 to 4, wherein a length of each of the cut positive electrode sheets is smaller than a length of each of the cut negative electrode sheets; and a horizontal distance between a positive electrode sheet of a positive electrode lamination unit and a negative electrode sheet of a negative electrode lamination unit adjacent to the positive electrode lamination unit is 1mm to 6mm.

6. The die-cutting lamination system according to any one of claims 1 to 5, further comprising a discharger arranged downstream of the detection apparatus, wherein the discharger is configured to cooperate with the first separator cutting mechanism to discharge a defective lamination unit.

7. A die-cutting lamination method using the die-cutting lamination system according to any one of claims 1 to 6, comprising:
(1) providing, by the unwinding mechanisms, electrode sheets and a separator, enabling the negative electrode cutting mechanism to cooperate with the negative electrode unwinding mechanism and cut negative electrode sheets, and enabling the positive electrode cutting mechanism to cooperate with the positive electrode unwinding mechanism and cut positive electrode sheets, to obtain a laminated layer comprising a separator, the negative electrode sheets, and the positive electrode sheets, the negative electrode sheet and the positive electrode sheet being alternately distributed on an upper side and a lower side of the separator;
(2) preheating, by the preheating apparatus, the separator, the positive electrode sheet, and the negative electrode sheet before and after the cutting, and roller-pressing, by the rolling apparatus, the laminated layer to respectively adhere the positive electrode sheets and the negative electrode sheets of the laminated layer to the separator to obtain a laminate comprising alternately distributed positive electrode lamination units and negative electrode lamination units;
(3) detecting, by the detection apparatus, whether the laminate has a defect, and cutting and discharging, by the first separator cutting mechanism, based on a detection result of the detection apparatus, a defective positive/negative electrode lamination unit and a negative/positive electrode lamination unit adjacent to the defective positive/negative electrode lamination unit in pairs; and
(4) alternately stacking, by the lamination apparatus, the positive electrode lamination units and the negative electrode lamination units, and performing separator cutting, by the second separator cutting mechanism, on a last qualified lamination unit based on a number of layers to be laminated to obtain an electrode assembly.

8. The method according to claim 7, wherein a length of each positive electrode sheet in the electrode assembly is smaller than a length of each negative electrode sheet in the electrode assembly, and the length of the negative electrode sheet is 0.5mm to 3mm smaller than a length of each separator in the electrode assembly.

9. The method according to claim 7 or 8, further comprising:
stacking, by the clamping jaw, the first auxiliary roller, and the second auxiliary roller in cooperation, lamination units to obtain the electrode assembly in which the positive electrode lamination units and the negative electrode lamination units are spread, aligned, and alternately stacked.

10. The method according to any one of claims 7 to 9, further comprising:
positioning the negative electrode sheet above the separator, positioning the positive electrode sheet below the separator, alternately pre-stacking a plurality of negative electrode lamination units and a plurality of positive electrode lamination units, and then stacking one layer of separator; or
positioning the positive electrode sheet above the separator, positioning the negative electrode sheet below the separator, pre-stacking one layer of separator, and then alternately stacking a plurality of positive electrode lamination units and a plurality of negative electrode lamination units.
